# EUROPÄISCHE PATENTSCHRIFT

(11) **EP 3 794 244 B1**
(45) Veröffentlichungstag und Bekanntmachung des Hinweises auf die Patenterteilung: **27.11.2024**
(21) Anmeldenummer: 19726358.5
(22) Anmeldetag: 20.05.2019
(51) Int. Cl.: F16D 25/12, F16D 25/0638, F16D 21/06

(54) **DOPPELKUPPLUNGSEINHEIT UND ANTRIEBSANORDNUNG MIT EINER SOLCHEN DOPPELKUPPLUNGSEINHEIT**
DUAL CLUTCH UNIT AND DRIVE ASSEMBLY COMPRISING SUCH A DUAL CLUTCH UNIT
UNITÉ D'EMBRAYAGE DOUBLE ET SYSTÈME D'ENTRAÎNEMENT DOTÉ D'UNE TELLE UNITÉ D'EMBRAYAGE DOUBLE

(30) Priorität: 18.05.2018 DE 102018112131
(43) Veröffentlichungstag der Anmeldung: 24.03.2021
(73) Patentinhaber: GKN Automotive Limited, Birmingham, West Midlands B37 7YE (GB)
(72) Erfinder: CHATENAY, Christoph, 53177 Bonn (DE); HAUPT, Jan, 51515 Kürten (DE)
(74) Vertreter: Neumann Müller Oberwalleney Patentanwälte PartG mbB
(86) Internationale Anmeldenummer: PCT/EP2019/062966
(87) Internationale Veröffentlichungsnummer: WO 2019/219971

(56) Entgegenhaltungen:
- DE-A1- 102008 040 172
- DE-A1- 102011 102 748
- DE-B- 1 149 218
- US-A- 2 935 889
- US-A- 3 734 259
- US-A1- 2006 113 157
- US-A1- 2018 058 513

## Beschreibung

Die Erfindung betrifft eine Doppelkupplungseinheit zur variablen Drehmomentverteilung auf zwei Ausgangswellen gemäß Oberbegriff nach Anspruch 1, die einen um eine Drehachse drehend antreibbaren Außenlamellenträger, einen ersten Innenlamellenträger, ein erstes Lamellenpaket zur Drehmomentübertragung zwischen dem Außenlamellenträger und dem ersten Innenlamellenträger, einen zweiten Innenlamellenträger, wobei der erste Innenlamellenträger und der zweite Innenlamellenträger relativ zueinander um die Drehachse drehbar angeordnet sind, und ein zweites Lamellenpaket zur Drehmomentübertragung zwischen dem Außenlamellenträger und dem zweiten Innenlamellenträger umfasst. Weiterhin betrifft die Erfindung eine Antriebsanordnung zum Antreiben einer Antriebsachse eines Kraftfahrzeuges mit einer solchen Doppelkupplungseinheit.

Die eingesetzten Reiblamellenkupplungen oder Lamellenkupplungen sind jedoch Bauteile, die im Betrieb eines Kraftfahrzeuges hohen Temperaturen ausgesetzt sind. Insbesondere bei Lamellenpaketen, die aus mehreren Scheiben, den sogenannten Innenlamellen und Außenlamellen, bestehen, ist somit eine Kühlung der Reiblamellen mit einem Kühl- und/oder Schmiermittel erforderlich.

Aus der US 2 935 889 A ist eine Doppelkupplungseinheit zur Drehmomenteinleitung zweier Eingangswellen auf eine Ausgangswelle bekannt. Die Doppelkupplungseinheit umfasst: einen um eine Drehachse rotierend angetriebenen äußeren Kupplungsscheibenträger, der mit der Ausgangswelle verbunden ist; einen ersten inneren Kupplungsscheibenträger und einen zweiten inneren Kupplungsscheibenträger, wobei der erste innere Kupplungsscheibenträger und der zweite innere Kupplungsscheibenträger relativ zueinander um die Drehachse drehbar angeordnet sind. Der erste innere Kupplungsscheibenträger umfasst einen ersten Verteilerkanal und der zweite innere Kupplungsscheibenträger umfasst einen zweiten Verteilerkanal. Der erste innere Kupplungsscheibenträger weist ferner eine Durchgangsbohrung auf, die den zweiten Verteilerkanal mit dem ersten Verteilerkanal fluidisch verbindet. Die Durchgangsbohrung weist die Form eines geraden Zylinders auf, der parallel zur Drehachse angeordnet ist.

Aus der US 3 734 259 A ist eine Doppelkupplungseinheit mit einem äußeren Kupplungsscheibenträger, einem ersten inneren Kupplungsscheibenträger, der eine Kupplungsscheibe trägt, und einem zweiten inneren Kupplungsscheibenträger, der zwei Kupplungsscheiben trägt, bekannt. In jeder der Kupplungsscheiben sind Öffnungen vorgesehen.

Aus der US 2006/113157 A1 ist ein einzelner Kupplungsscheibenträger für eine Mehrscheibenkupplung bekannt, die einen äußeren zylindrischen Teil mit am Außenumfang ausgebildeten Nuten aufweist. Am Innenumfang des äußeren zylindrischen Teils ist eine innere Umfangsfläche ausgebildet. Die innere Umfangsfläche begrenzt einen Raum, der durch eine Wand in zwei konische Hälften geteilt ist. Die Wand erstreckt sich radial von dem äußeren zylindrischen Teil in Richtung eines inneren zylindrischen Nabenabschnitts. In dem Nabenabschnitt ist eine Durchtrittsbohrung eingebracht.

Aus der US 2018/058513 A1 ist eine Anordnung für die geregelte Kühlung und/oder Schmierung von Lamellenpaketen von Kupplungen bekannt, die in einem Gehäuse angeordnet sind. Das Gehäuse umfasst eine mittlere Trennwand, die eine Radialwand und eine zentrale Nabe umfasst. Die Trennwand trennt das Gehäuse in zwei interne Kammern, in denen die Lamellenpakete angeordnet sind. Jedes Lamellenpaket kann verschachtelte Lamellen, wie Trennplatten, die an ihrem äußerem Umfang an dem Gehäuse befestigt oder verzahnt sind, und Reiblamellen, die mit den Trennplatten verschachtelt sind und mit ihrem inneren Umfang mit den Naben verzahnt sind, umfassen.

Aus der WO 2017/157479 A1 ist eine Doppelkupplungseinheit zur variablen Drehmomentverteilung auf zwei Ausgangswellen bekannt. Die Doppelkupplungseinheit weist zwei Reibungskupplungen auf, wobei jeder der beiden Kupplungen eine eigene Kupplungsbeölungsleitung zugeordnet ist.

Aus der EP 1 664 567 B1 ist eine Doppelkupplungseinheit bekannt, bei der ein gemeinsamer Innenlamellenträger angetrieben wird und zwei Außenlamellenträger unabhängig voneinander um die gemeinsame Drehachse drehbar angeordnet sind. Die beiden Lamellenpakete werden über Schmierölkanäle, die in dem gemeinsamen Innenlamellenträger integriert sind, mit Kühl- und/oder Schmiermittel versorgt. Über einen Ölkanal, der in Verlängerung zwischen den beiden Lamellenpaketen im Innenlamellenträger ausgebildet ist, wird das Kühl- und/oder Schmiermittel, ausgehend von der Nabe, radial nach außen in axial verlaufende Ringkanäle und schließlich in die beiden Lamellenpakte geführt.

Aufgabe der Erfindung ist es, eine Doppelkupplungseinheit der eingangs genannten Art zur Verfügung zu stellen, die bei geringstem Bauraum und Verschleiß sehr hohe Kräfte aufnehmen kann und auch dem Dauerbetrieb mit Schlupf standhält.

Diese Aufgabe wird dadurch gelöst, dass bei der Doppelkupplungseinheit der eingangs genannten Art eine Bohrlochlängsachse der zumindest einen Durchtrittsbohrung mit der Drehachse einen Bohrungswinkel einschließt.

Das Kühlmittel dient der Kühlung und/oder Schmierung der Lamellenpakete, sodass das Kühlmittel auch als Kühl- und/oder Schmiermittel bezeichnet werden könnte. Üblicherweise wird hierfür ein ölhaltiges Kühlmittel verwendet.

Der erste Verteilerkanal hat somit eine Doppelfunktion, erstens, die Versorgung des ersten Lamellenpaktes mit Kühlmittel und, zweitens, die teilweise Weiterleitung des Kühlmittels in den zweiten Verteilerkanal. Damit ist der zweite Verteilerkanal in Flussrichtung des Kühlmittels dem ersten Verteilerkanal nachgeschaltet. Entsprechend strömt das von der zentralen Ölzufuhr kommende Kühlmittel zunächst durch den ersten Verteilerkanal und lediglich eine Teilmenge des Kühlmittels wird durch den ersten Verteilerkanal in den zweiten Verteilerkanal weitergeleitet. Damit sind die beiden Verteilerkanäle in Reihe geschaltet. Durch die Reihenschaltung der beiden Verteilerkanäle in Flussrichtung des Kühlmittels hintereinander ergibt sich eine kompakt bauende Doppelkupplungseinheit.

Vorzugsweise kann der erste Verteilerkanal über einen seitlichen Zugang mit Kühlmittel versorgt werden. Hierzu kann die Einlauföffnung an einer vom zweiten Innenlamellenträger abgewandten Stirnseite des ersten Innenlamellenträgers ausgebildet sein. Die Einlauföffnung kann eine ringförmige Öffnung sein, die konzentrisch zur Drehachse angeordnet ist.

Der erste Verteilerkanal ist im ersten Innenlamellenträger und der zweite Verteilerkanal ist im zweiten Innenlamellenträger ausgebildet. Die beiden Innenlamellenträger sind relativ zueinander um die gemeinsame Drehachse drehbar angeordnet, beispielsweise in einem Kupplungsgehäuse, sodass im Betrieb der Doppelkupplungseinheit die beiden Innenlamellenträgern, je nach Fahrzustand, mit unterschiedlichen Drehzahlen um die Drehachse rotieren können. Um den ersten Verteilerkanal selbst bei Drehzahlunterschieden mit dem zweiten Verteilerkanal flüssigkeitsleitend zu verbinden, kann eine Drehdurchführung vorgesehen sein. Hierzu kann der erste Innenlamellenträger einen axialen Vorsprung mit der zumindest einen Durchtrittsbohrung aufweisen. Axial bedeutet in Richtung der Drehachse, respektive entlang der Drehachse, insbesondere parallel zur Drehachse. In bevorzugter Weise ist der zweite Verteilerkanal über die zumindest eine Durchtrittsbohrung mit dem ersten Verteilerkanal flüssigkeitsleitend verbunden. Entsprechend kann vorgesehen sein, dass das von der zentralen Ölzufuhr kommende Kühlmittel zunächst durch den ersten Verteilerkanal strömt und eine Teilmenge des Kühlmittels durch die zumindest eine Durchtrittsbohrung in den zweiten Verteilerkanal weitergeleitet wird.

Vorzugsweise erstrecken sich mehrere der Durchtrittsbohrungen durch den Vorsprung, insbesondere zwei, drei, vier, fünf, sechs oder mehr als sechs Durchtrittsbohrungen. Die Durchtrittsbohrungen können in Umfangsrichtung um die Drehachse verteilt angeordnet sein. Die zumindest eine Durchtrittsbohrung kann an einer dem zweiten Verteilerkanal zugewandten Stirnseite jeweils eine Auslassöffnung aufweisen. Zweckmäßigerweise ragt der Vorsprung in den zweiten Verteilerkanal hinein. Damit kann die zumindest eine Durchtrittsbohrung in Flussrichtung ausgangsseitig direkt in den zweiten Verteilerkanal münden. In Flussrichtung eingangsseitig kann der erste Verteilerkanal direkt in die zumindest eine Durchtrittsbohrung münden. Vorzugsweise kann ein Außendurchmesser des Vorsprungs kleiner als ein Außendurchmesser des zweiten Verteilerkanals oder gleich dem Außendurchmesser des zweiten Verteilerkanals sein. Ein Innendurchmesser des Vorsprungs kann größer als ein Innendurchmesser des zweiten Verteilerkanals oder gleich dem Innendurchmesser des zweiten Verteilerkanals sein. Zweckmäßigerweise ist der zweite Verteilerkanal zumindest in einem Bereich axialer Überlappung mit dem Vorsprung, das heißt entlang desjenigen Bereiches, in dem der Vorsprung in den zweiten Verteilerkanal hineinragt, als ein sich in axialer Richtung erstreckender Ringspalt gestaltet. Auf diese Weise können die beiden Innenlamellenträger relativ zueinander um die Drehachse drehen. Im Ergebnis bilden der Vorsprung des ersten Innenlamellenträgers, mit der zumindest einen Durchtrittsbohrung, und der zweite Verteilerkanal, im Bereich der axialen Überlappung mit dem Vorsprung, gemeinsam die Drehdurchführung.

Vorzugsweise stützen sich der erste Innenlamellenträger und der zweite Innenlamellenträger axial gegeneinander ab. Dadurch ergibt sich eine besonders geringe Baubreite. Axial zwischen den beiden Innenlamellenträgern kann ein Abstandhalter angeordnet sein. Der Abstandhalter kann ein konzentrisch zur Drehachse und den beiden Innenlamellenträgern angeordneter ringförmiger Körper sein. Aufgrund der Drehzahlunterschiede zwischen den beiden Innenlamellenträgern, die im Betrieb der Doppelkupplungseinheit vorliegen können, weist der Abstandhalter vorzugsweise eine gleitfähige Oberfläche auf. Der Abstandhalter kann auf den Vorsprung des ersten Innenlamellenträgers aufgeschoben sein. Weiterhin kann der Abstandhalter eine Dichtfunktion übernehmen und den Übergang zwischen dem ersten Innenlamellenträger und dem zweiten Innenlamellenträger radial nach außen abdichten. Radial bedeutet entlang einer Achse, die in einer Ebene senkrecht zur Drehachse liegt. Der Abstandhalter kann insbesondere aus einem Bronzematerial, aus einem Material auf Bronzebasis, einem Sintermaterial, insbesondere Sinter-Bronze oder dergleichen hergestellt sein.

Gemäß einem Aspekt der vorliegenden Erfindung kann der erste Verteilerkanal und/oder der zweite Verteilerkanal jeweils als ein sich in axialer Richtung erstreckender und konzentrisch zur Drehachse angeordneter Ringspalt ausgebildet sein. Aufgrund der Zentrifugalkräfte wird das Kühlmittel gegen eine radial äußere Kanalwand des jeweiligen Verteilerkanals gedrückt. Alternativ zur Ausgestaltung des ersten Verteilerkanals und/oder des zweiten Verteilerkanals als Ringspalt kann der erste Innenlamellenträger und/oder der zweite Innenlamellenträger mehrere in Umfangsrichtung um die Drehachse verteilt angeordnete Verteilerkanäle aufweisen. Somit können mehrere der ersten Verteilerkanäle und/oder mehrere der zweiten Verteilerkanäle vorgesehen sein. Die Verteilerkanäle können jeweils als Bohrungen ausgebildet sein, die sich in axialer Richtung erstrecken. Um das Kühlmittel bei Rotation des jeweiligen Innenlamellenträgers zu fördern, können die als Bohrungen ausgestalteten Verteilerkanäle schräg zur Drehachse verlaufen. Insbesondere können durch die Verteilerkanäle gebildete Bohrlochlängsachsen mit der Drehachse jeweils einen Winkel einschließen. Der Winkel kann zwischen 0,01 ° und 10° liegen. Der jeweilige Winkel öffnet sich vorzugsweise sich in Flussrichtung des Kühlmittels. Die Bohrlochlängsachsen der Verteilerkanäle können denselben Winkel mit der Drehachse einschließen. Grundsätzlich kann sich der Winkel der Bohrlochlängsachsen der Verteilerkanäle im ersten Innenlamellenträger auch von dem Winkel der der Bohrlochlängsachsen der Verteilerkanäle im zweiten Innenlamellenträger zur Drehachse unterscheiden.

Zweckmäßigerweise sind in der radial äußeren Kanalwand des ersten Verteilerkanals und in der radial äußeren Kanalwand des zweiten Verteilerkanals jeweils Austrittsöffnungen ausgebildet, die in die Austrittskanäle des jeweiligen Innenlamellenträgers münden. Besonders gute Ergebnisse hinsichtlich einer gleichmäßigen Kühl- und/oder Schmierung der beiden Lamellenpakte wurden erzielt, wenn die Austrittsöffnungen auf einer konzentrisch zur Drehachse angeordneten, gedachten Spirale ausgebildet sind. Im Betrieb der Doppelkupplungseinheit hat sich gezeigt, dass die Zufuhr des Kühlmittels über die seitlich am ersten Innenlamellenträger ausgebildete Einlauföffnung des ersten Verteilerkanals zu einer Überversorgung des ersten Lamellenpaktes führen kann. Um die Kühlmittelversorgung lokal anzupassen, kann der Durchmesser der Austrittsöffnungen im ersten Lamellenträger sowie im zweiten Lamellenträger variiert werden. Insbesondere kann der Durchmesser der gesamten Austrittskanäle variiert werden. Weiterhin kann zumindest eine Teilmenge der Austrittsöffnungen beziehungsweise der Austrittskanäle im ersten Verteilerkanal einen kleineren Durchmesser aufweisen als zumindest eine Teilmenge der Austrittsöffnungen beziehungsweise der Austrittskanäle im zweiten Verteilerkanal. Die Austrittskanäle verlaufen vorzugsweise in radialer Richtung.

Weiterhin kann eine den ersten Verteilerkanal radial außenseitig begrenzende Mantelfläche und/oder eine den zweiten Verteilerkanal radial außenseitig begrenzende Mantelfläche kegelstumpfförmig ausgebildet sein. Die Achse des jeweiligen Kegelstumpfes ist in bevorzugter Weise die gemeinsame Drehachse, um die die beiden Innenlamellenträger und der Außenlamellenträger drehbar angeordnet sind. Vorzugsweise weitet sich der jeweilige insbesondere ringspaltförmige Verteilerkanal in Flussrichtung des Kühlmittels radial nach außen auf. Durch den in axialer Richtung zunehmenden Abstand der radial außenseitigen Mantelfläche wird das Kühlmittel durch die Zentrifugalkraft an der radial äußeren Kanalwand durch den jeweiligen Verteilerkanal gefördert, und zwar in einer Richtung weg von der Einlauföffnung. Insbesondere beträgt ein Öffnungswinkel zwischen Mantellinien der jeweiligen Mantelfläche und der Drehachse zwischen 0,01 ° und 10°. Der jeweilige Öffnungswinkel öffnet sich vorzugsweise sich in Flussrichtung des Kühlmittels.

Anstatt der sich in axialer Richtung radial aufweitenden Ausgestaltung des jeweiligen Verteilerkanals kann die jeweilige radiale äußere Kanalwand des ersten Verteilerkanals und/oder des zweiten Verteilerkanals auch parallel zur Drehachse ausgerichtet sein. In dem jeweiligen Verteilerkanal kann jeweils eine archimedische Schraube angeordnet sein. Die archimedische Schraube kann wie eine Schneckenpumpe das Kühlmittel bei Rotation des jeweiligen Innenlamellenträgers in dem jeweiligen Verteilerkanal fördern. Die jeweilige archimedische Schraube ist in dem zugeordneten Verteilerkanal mit dem ersten Innenlamellenträger beziehungsweise dem zweiten Innenlamellenträger drehfest verbunden.

Vorzugsweise ist der zweite Verteilerkanal an einem dem ersten Innenlamellenträger abgewandten axialen Ende verschlossen. Somit kann das Kühlmittel den zweiten Verteilerkanal in bevorzugter Weise ausschließlich über die Austrittskanäle verlassen.

Vorzugsweise ist vorgesehen, dass das Kühlmittel den ersten Verteilerkanal ausschließlich über die Austrittskanäle im ersten Innenlamellenträger und über die zumindest eine Durchtrittsbohrung verlassen kann. Die Austrittskanäle schließen sich vorzugsweise unmittelbar an den zugehörigen Verteilerkanal an und sind radial zwischen dem jeweiligen Verteilerkanal und dem zugehörigen Lamellenpaket angeordnet.

Des Weiteren können in dem ersten Verteilerkanal Leitmittel zur Leitung einer Teilmenge des Kühlmittels hin zur zumindest einen Durchtrittsbohrung ausgebildet sein. Dadurch wird gewährleistet, dass in dem in Flussrichtung dem ersten Verteilerkanal nachgeordneten zweiten Verteilerkanal stets eine Teilmenge des Kühlmittels ankommt, um eine Unterversorgung des zweiten Lamellenpaktes beziehungsweise eine Überversorgung des ersten Lamellenpaktes zu vermeiden. Die Leitmittel können mindestens eine insbesondere längliche Vertiefung, wie eine Nut, Rille, Rinne oder dergleichen, aufweisen. Insbesondere weist die zumindest eine Vertiefung eine konstante Tiefe über deren Länge auf. Die zumindest eine Vertiefung kann in der radial äußeren Kanalwand des ersten Verteilerkanals ausgebildet sein. Die mindestens eine Vertiefung kann sich über mindestens 20% der axialen Längserstreckung des ersten Verteilerkanals erstrecken. Vorzugsweise erstreckt sich die mindestens eine Vertiefung über mehr als 70% der Längserstreckung des ersten Verteilerkanals, wobei sich die mindestens eine Vertiefung über die gesamte Längserstreckung des ersten Verteilerkanals erstrecken kann. Die zumindest eine Vertiefung kann in der zumindest einen Durchtrittsbohrung münden. Vorteilhafterweise ist einer jeden Durchtrittsbohrung eine eigene Vertiefung zugeordnet. Beispielsweise kann der erste Innenlamellenträger mehrere in Umfangsrichtung angeordnete Durchtrittsbohrungen, insbesondere zwei, drei, vier, fünf, sechs oder mehr Durchtrittsbohrungen aufweisen, wobei in einer jeden Durchtrittsbohrung genau eine Vertiefung münden kann. Somit kann die Anzahl an Durchtrittsbohrungen und die Anzahl an Vertiefungen gleich sein.

Zweckmäßigerweise schließt sich die zumindest eine Durchtrittsbohrung radial außen mit der radial äußeren Kanalwand, insbesondere mit der zugehörigen Vertiefung an, um einen stufenlosen Übergang zwischen dem ersten Verteilerkanal und der zumindest einen Durchtrittsbohrung bereitzustellen. Eine Bohrlochlängsachse der zumindest einen Durchtrittsbohrung kann mit der Drehachse einen Bohrungswinkel, der zwischen 0,01 ° und 10° beträgt, einschließen. Insbesondere sind der Bohrungswinkel und der Öffnungswinkel der Mantellinien der Mantelfläche des ersten Verteilerkanals identisch.

In bevorzugter Weise weist der Außenlamellenträger mehrere Ablaufkanäle zum Abführen des Kühlmittels auf. Das von radial innen über die Austrittsbohrungen der Innenlamellenträger abgegebene Kühlmittel wird über die Zentrifugalkräfte durch die Lamellenpakte hindurchgeleitet, kühlt und/oder schmiert die einzelnen Lamellen, und gelangt schließlich zum Außenlamellenträger, wo es über die Ablaufkanäle nach radial außen abgeführt werden kann. Zumindest eine Teilmenge der Ablaufkanäle entlang des ersten Lamellenpaktes kann einen kleineren Durchmesser aufweisen als zumindest eine Teilmenge der Ablaufkanäle entlang des zweiten Lamellenpaktes. Auf diese Weise kann die Ablaufmenge an Kühlmittelversorgung lokal angepasst werden, um eine gleichmäßige Beölung beider Lamellenpakete zu erzielen. Das aus dem Außenlamellenträger ablaufende Kühlmittel kann über eine Gehäusewand eines Kupplungsgehäuses der Doppelkupplungseinheit zum Beispiel in einen Sumpf im Kupplungsgehäuse abfließen. Dort kann es über eine Fördereinrichtung der zentralen Ölzufuhr zugeführt werden. Die Fördereinrichtung kann insbesondere eine Pumpe oder ein drehendes Zahnrad mit einem Abstreifer sein, wobei das Zahnrad in den Sumpf eintauchen und der Abstreifer das Kühlmittel abstreifen kann.

Weiterhin kann die Doppelkupplungseinheit einen Umlenkring aufweisen. Der Umlenkring kann, in Flussrichtung, eingangsseitig mit der zentralen Ölzufuhr und ausgangsseitig mit dem ersten Verteilerkanal flüssigkeitsleitend verbunden sein. Der Umlenkring kann konzentrisch zur Drehachse angeordnet sein. Vorzugsweise ist der Umlenkring in einer Ausnehmung eines Kupplungsgehäuses eingesetzt, respektive eingepresst und ist relativ zum Kupplungsgehäuse ortsfest gehalten. Somit dreht sich der Umlenkring im Betrieb der Doppelkupplungseinheit nicht um die Drehachse, sondern steht still. Der Umlenkring kann eine in Umfangsrichtung offen gestaltete Sammelnut und mehrere in Umfangsrichtung verteilt angeordnete Übergabebohrungen, die zumindest im Wesentlichen axial ausgerichtet und mit der Sammelnut flüssigkeitsleitend verbunden sind, aufweisen. Im Betrieb kann das von radial außerhalb dem Umlenkring zugeführte Kühlmittel in der Sammelnut den Umlenkring umspülen und über die Übergabebohrungen in axialer Richtung aus dem Umlenkring austreten. Dies ermöglicht eine axial kompakte Bauweise. Der Umlenkring kann zum Beispiel ein Kunststoffteil, insbesondere ein Spritzgussteil aus Kunststoff sein, wobei grundsätzlich auch metallische Materialien möglich sind.

Des Weiteren kann seitlich am Außenlamellenträger eine Abdeckung drehfest angeordnet sein. In der Abdeckung kann zumindest eine Übernahmebohrung ausgebildet sein, die die zumindest eine Übergabebohrung des Umlenkringes mit dem ersten Verteilerkanal flüssigkeitsleitend verbindet. Im Betrieb der Doppelkupplungseinheit dreht sich die Abdeckung zusammen mit dem Außenlamellenträger um die Drehachse. Aufgrund der Drehzahlunterschiede gegenüber dem stillstehenden Umlenkring kann eine Drehdurchführung zur Fluidverbindung vorgesehen sein. Beispielsweise kann die Abdeckung mehrere in Umfangsrichtung um die Drehachse verteilt angeordnete Übernahmebohrungen aufweisen, wobei die Übernahmebohrungen der Abdeckung und die Übergabeöffnungen des Umlenkringes derart zueinander angeordnet sein können, dass sie während einer Umdrehung der Abdeckung um die Drehachse mindestens einmal vorübergehend flüssigkeitsleitend miteinander verbunden sind. Um den Fluid-übergang zwischen dem Umlenkring und der Abdeckung abzudichten, kann der Umlenkring in einen zum Umlenkring hin offen ausgebildeten Ringspalt eingreifen. Die Abdeckung wiederum kann zur Abdichtung des Fluidübergangs zwischen den Übernahmebohrungen und dem ersten Verteilerkanal einen axialen Vorsprung aufweisen, der in den ersten Verteilerkanal hineinragt. Der erste Verteilerkanal ist zumindest in einem Bereich axialer Überlappung mit dem Vorsprung der Abdeckung, das heißt entlang desjenigen Bereiches, in dem der Vorsprung in den ersten Verteilerkanal hineinragt, als ein sich in axialer Richtung erstreckender Ringspalt gestaltet. Auf diese Weise können die drehfest mit dem Außenlamellenträger verbundene Abdeckung und der erste Innenlamellenträger mit unterschiedlichen Drehzahlen um die Drehachse drehen. Da auch zwischen der Abdeckung und dem ersten Innenlamellenträger Drehzahlunterschiede auftreten können, kann hier ebenso eine Drehdurchführung zur Fluidverbindung vorgesehen sein. Anstatt der beschriebenen Anordnung der Abdeckung zwischen dem Umlenkring und dem ersten Innenlamellenträger kann der Umlenkring auch unmittelbar in den ersten Verteilerkanal hineinragen, sodass durch die einander axial überlappenden Bereiche des Umlenkringes und des ersten Innenlamellenträgers eine Drehdurchführung gebildet sein kann.

Die Drehmomentübertragung zwischen dem Außenlamellenträger und dem jeweiligen Innenlamellenträger kann in beide Richtungen erfolgen. Im regulären Betrieb treibt ein Antriebsmotor den Außenlamellenträger drehend an, sodass das Drehmoment vom Außenlamellenträger über das erste Lamellenpaket auf den ersten Innenlamellenträger und/oder über das zweite Lamellenpaket auf den zweiten Innenlamellenträger übertragen werden kann. Bei Einsatz eines Generators im Antriebsstrang, beispielsweise eine elektrischer Antrieb, der sowohl als Motor als auch als Generator arbeiten kann, kann zur Energierückgewinnung der Drehmomentfluss umgekehrt sein, sodass Drehmoment von dem ersten Innenlamellenträger über das erste Lamellenpaket und/oder vom zweiten Innenlamellenträger über das zweite Lamellenpaket auf den Außenlamellenträger übertragen werden kann.

Die Doppelkupplungseinheit ermöglicht eine variable Drehmomentverteilung auf die beiden Ausgangswellen insbesondere eines Kraftfahrzeuges. Ein Differentialgetriebe zur Drehmomentverteilung auf die beiden Ausgangswellen ist damit nicht erforderlich. Zur variablen Drehmomentverteilung kann die Doppelkupplungseinheit zwei separat steuerbare Reibungskupplungen aufweisen, deren übertragbares Drehmoment individuell variabel einstellbar ist. Je nach Fahrzustand kann das Drehmoment an einem kurveninneren beziehungsweise an einem kurvenäußeren Rad individuell eingestellt werden, was insgesamt zu einer verbesserten Fahrdynamik, respektive Fahrstabilität führt. Bei Geradeausfahrt können beide Reibungskupplungen geschlossen sein. Der Drehzahlausgleich bei Kurvenfahrt kann dann durch Durchrutschen der Reibungskupplungen ermöglicht werden. Je enger die Kurve, je stärker das Durchrutschen. Werden die Kupplungen hingegen fest geschlossen, entspricht das einer 100-Prozent-Sperre. Somit kann mittels der Doppelkupplungseinheit die Antriebskraft stufenlos für jedes Rad geregelt werden. Dieses Steuerungsprinzip wird auch als aktive Momentenverteilung oder "Torque vectoring" bezeichnet. Dies kann im Rahmen einer fahrdynamischen Abstimmung des Fahrzeuges gezielt ausgenutzt werden, um eine ungewollte Neigung des Fahrzeuges zum Untersteuern durch ein positives Giermoment abzumindern. Des Weiteren kann die Fahrzeugdynamik auch durch einen gesteuerten Drehzahlunterschied zwischen einer Vorderachse und einer Hinterachse des Kraftfahrzeuges positiv beeinflusst werden. Ebenso können, vergleichbar zu einem Sperrdifferential, die beiden Fahrzeugräder durch synchrones Ansteuern der Kupplung miteinander verbunden werden. Dies führt zu einer deutlich verbesserten Traktion und kann im oberen Geschwindigkeitsbereich zu einer Gierdämpfung genutzt werden.

Eine Lösung der oben genannten Aufgabe besteht weiter in einer Antriebsanordnung zum Antreiben einer Antriebsachse eines Kraftfahrzeuges, umfassend: eine Antriebsmaschine mit einer Motorwelle, zwei konzentrisch zueinander angeordnete Ausgangswellen und eine im Leistungspfad zwischen der Antriebsmaschine und den zwei Ausgangswellen angeordnete Kupplungseinheit, die nach zumindest einer der oben genannten Ausführungsformen gestaltet ist. Die Motorwelle treibt den Außenlamellenträger drehend an, und eine erste der beiden Ausgangswellen ist mit dem ersten Innenlamellenträger und eine zweite der beiden Ausgangswellen ist mit dem zweiten Innenlamellenträger drehfest verbunden. Mit der erfindungsgemäßen Antriebsanordnung ergeben sich dieselben Vorteile wie mit der erfindungsgemäßen Doppelkupplungseinheit, sodass diesbezüglich auf obige Beschreibung verwiesen wird.

Bevorzugte Ausführungsbeispiele werden nachstehend anhand der Zeichnungsfiguren erläutert. Hierin zeigt:
- Figur 1: eine erfindungsgemäße Doppelkupplungseinheit gemäß einer ersten Ausführungsform im Längsschnitt;
- Figur 2: ein vergrößerter Teilausschnitt der Doppelkupplungseinheit nach Figur 1;
- Figur 3: ein vergrößerter Teilausschnitt der Doppelkupplungseinheit nach Figur 1 im Längsschnitt;
- Figur 4: die Doppelkupplungseinheit im Querschnitt;
- Figur 5: ein Umlenkring in perspektivischer Ansicht;
- Figur 6: der Umlenkring aus Figur 5 in Seitenansicht;
- Figur 7: ein vergrößerter Teilausschnitt des Umlenkringes aus Figur 5 im Längsschnitt; und
- Figur 8: ein vergrößerter Teilausschnitt einer Doppelkupplungseinheit gemäß einer zweiten Ausführungsform im Längsschnitt;
- Figur 9: eine archimedische Schraube aus Figur 8 im Längsschnitt; und
- Figur 10: ein vergrößerter Teilausschnitt einer Doppelkupplungseinheit gemäß einer dritten Ausführungsform im Längsschnitt.

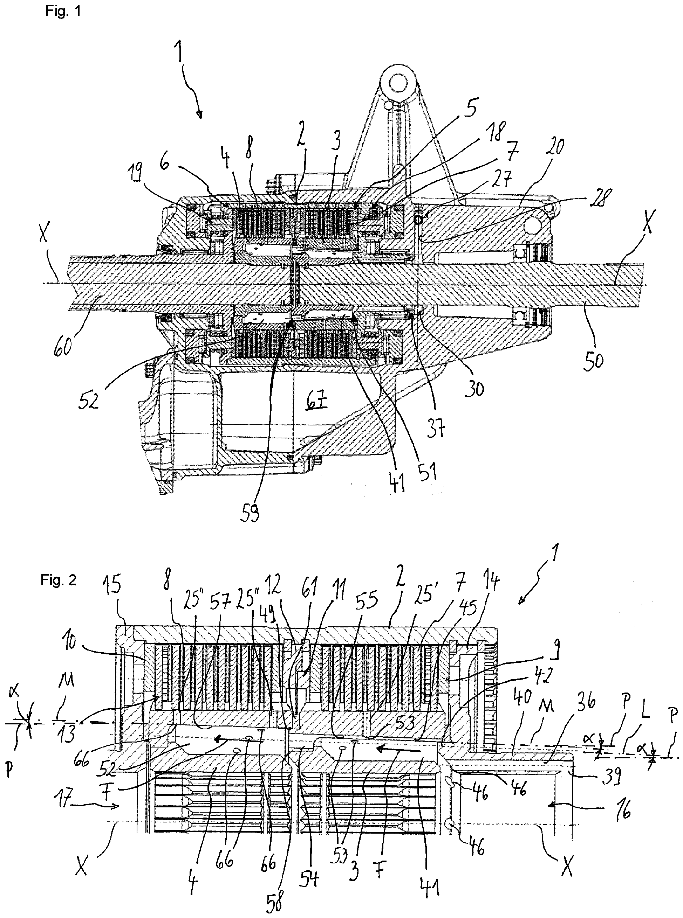

Die Figuren 1 bis 7, welche nachstehend gemeinsam beschrieben werden, zeigen eine erfindungsgemäße Doppelkupplungseinheit 1 gemäß einer ersten Ausführungsform, die auch als Kupplungsanordnung bezeichnet werden kann. Die Doppelkupplungseinheit 1 dient insbesondere zum Einsatz im Antriebsstrang eines Kraftfahrzeuges zur variablen Drehmomentverteilung von einem Eingangsteil, hier einem Außenlamellenträger 2, auf zwei Ausgangsteile, hier einem ersten Innenlamellenträger 3 und einem zweiten Innenlamellenträger 4. Der Außenlamellenträger 2 und die beiden Innenlamellenträger 3 sind drehbar um eine Drehachse X angeordnet. Der Außenlamellenträger 2 kann beispielsweise über ein Ringrad drehend antreibbar sein. Zur variablen Drehmomentverteilung weist die Doppelkupplungseinheit 1 zwei separat steuerbare Reibungskupplungen 5, 6, deren übertragbares Drehmoment individuell variabel einstellbar ist.

Damit eignet sich die Doppelkupplungseinheit 1 zur aktiven Steuerung der Gierbewegung des Kraftfahrzeugs beziehungsweise der Gierwinkelgeschwindigkeit. Dies wird dadurch bewerkstelligt, dass das Drehmoment auf eine rechte Ausgangswelle, die auch als Seitenwelle 50 bezeichnet wird, und auf eine linke Ausgangswelle, die auch als Seitenwelle 60 bezeichnet wird, einer angetriebenen Achse unterschiedlich verteilt beziehungsweise gezielt eingestellt wird. Derartige Systeme zur variablen Drehmomentverteilung werden auch als "Torque Vectoring"-Systeme oder "Active Yaw"-Systeme bezeichnet. Das Steuerungsprinzip wird auch als aktive Momentenverteilung oder "Torque Vectoring" bezeichnet.

Der erste Innenlamellenträger 3 ist hier mit der rechten Seitenwelle 50 und der zweite Innenlamellenträger 4 mit der linken Seitenwelle 60 der angetriebenen Achse drehfest verbunden. Entsprechend können die beiden Innenlamellenträger 3, 4 auch als Kupplungsnaben bezeichnet werden.

Die beiden Reibungskupplungen 5, 6 sind axial nebeneinander und konzentrisch zur Drehachse X angeordnet. Sie sind hinsichtlich ihres Aufbaus, insbesondere ihrer geometrischen Abmessungen vorzugsweise gleich gestaltet. Konkret weisen die Reibungskupplungen 5, 6 jeweils ein Lamellenpaket 7, 8 auf. Das erste Lamellenpaket 7 dient zur variablen Drehmomentübertragung zwischen dem Außenlamellenträger 2 und dem ersten Innenlamellenträger 3, während das zweite Lamellenpaket 8 zur variablen Drehmomentübertragung zwischen dem Außenlamellenträger 2 und dem zweiten Innenlamellenträger 4 dient. Die beiden Lamellenpakete 7, 8 sind individuell mit Kraft beaufschlagbar, sodass das auf die jeweilige Seitenwelle 50, 60 zu übertragende Drehmoment nach Bedarf genau eingestellt werden kann. Hierzu umfassen die Lamellenpakete 7, 8 jeweils mehrere mit dem Außenlamellenträger 2 drehfest und axial bewegliche Außenlamellen sowie mehrere mit dem zugehörigen Innenlamellenträger 3, 4 drehfest und axial bewegliche Innenlamellen, die axial abwechselnd angeordnet sind.

Die beiden Lamellenpakete 7, 8 sind jeweils von einer zugehörigen Druckplatte 9, 10 axial in Richtung aufeinander zu beaufschlagbar und jeweils gegen ein zugehöriges Stützelement 11, 12 axial abgestützt. Die beiden Stützelemente 11, 12, welche entsprechend axial zwischen den beiden Lamellenpakten 7, 8 angeordnet sind, sind wiederum gegen den Außenlamellenträger 2 axial abgestützt. Die Stützelemente 11, 12 sind ringförmig gestaltet und konzentrisch zur Drehachse X angeordnet. Die beiden Stützelemente 11, 12 greifen axial ineinander und stützen sich unabhängig voneinander gegen den Außenlamellenträger 2 axial ab.

Die Doppelkupplungseinheit 1 weist einen Kupplungsraum 13 auf, der radial außenseitig durch den Außenlamellenträger 2 und radial innenseitig durch die beiden Innenlamellenträger 3, 4 begrenzt ist. Weiterhin ist eine rechte Abdeckung 14 und eine linke Abdeckung 15 vorgesehen, die den Kupplungsraum 13 seitlich begrenzen. Die beiden Abdeckungen 14, 15 sind drehfest mit dem Außenlamellenträger 2 verbunden und weisen jeweils eine zentrale Öffnung 16, 17 zur Aufnahme der rechten beziehungsweise der linken Seitenwelle 50, 60 auf. Zwischen den Abdeckungen 14, 15 und der jeweiligen Seitenwelle 50, 60 ist eine Gleitlagerung vorgesehen. In dem Kupplungsraum 13 sind das erste Lamellenpaket 7, das erste Stützelement 11, das zweite Stützelement 12 und das zweite Lamellenpaket 8 aufgenommen.

Jede der beiden Reibungskupplungen 5, 6 ist von einer zugehörigen Aktuatoreinheit 18, 19 individuell betätigbar. Hierfür sind die beiden Aktuatoreinheiten 18, 19 unabhängig voneinander mittels einer Steuereinheit (nicht dargestellt) steuerbar, sodass ein vom ersten Lamellenpaket 7 auf den ersten Innenlamellenträger 3 übertragbares erstes Drehmoment und ein vom zweiten Lamellenpaket 8 auf den zweiten Innenlamellenträger 4 übertragbares zweites Drehmoment unabhängig voneinander variabel einstellbar sind. Die beiden Aktuatoreinheiten 18, 19 sind hinsichtlich ihres Aufbaus und Funktionsweise gleich gestaltet.

Die Aktuatoreinheiten 18, 19 können hydraulische oder elektrische Aktuatoreinheiten sein, insbesondere elektrohydraulische, elektromotorische oder elektromagnetische Aktuatoreinheiten. Die Aktuatoren stützen sich jeweils an einem Kupplungsgehäuse 20 in entgegengesetzte axiale Richtungen axial ab. Die hier hydraulisch betrieben Aktuatoren weisen jeweils einen ringförmigen Kolben 21 auf, der in einer zugehörigen ringförmigen Zylinderkammer 22 des Kupplungsgehäuses 20 axial verschiebbar einsitzt. In den seitlich angeordneten Abdeckungen 14, 15 des Außenlamellenträgers 2 ist jeweils eine Öffnung 23 ausgebildet, durch die hindurch der jeweilige Kolben 21 mit der zugehörigen Druckplatte 9, 10 zur Betätigung der jeweiligen Reibungskupplung 5, 6 zusammenwirkt. Über hier nicht dargestellte Ölkanäle kann mittels einer Hydraulikpumpe ein hydraulischer Druck erzeugt werden, sodass der jeweilige Kolben 21 axial in Richtung Lamellenpaket 7, 8 bewegt wird. Zur Rückstellung der Kolben 21 sind hier Rückstellfedern 24 vorgesehen.

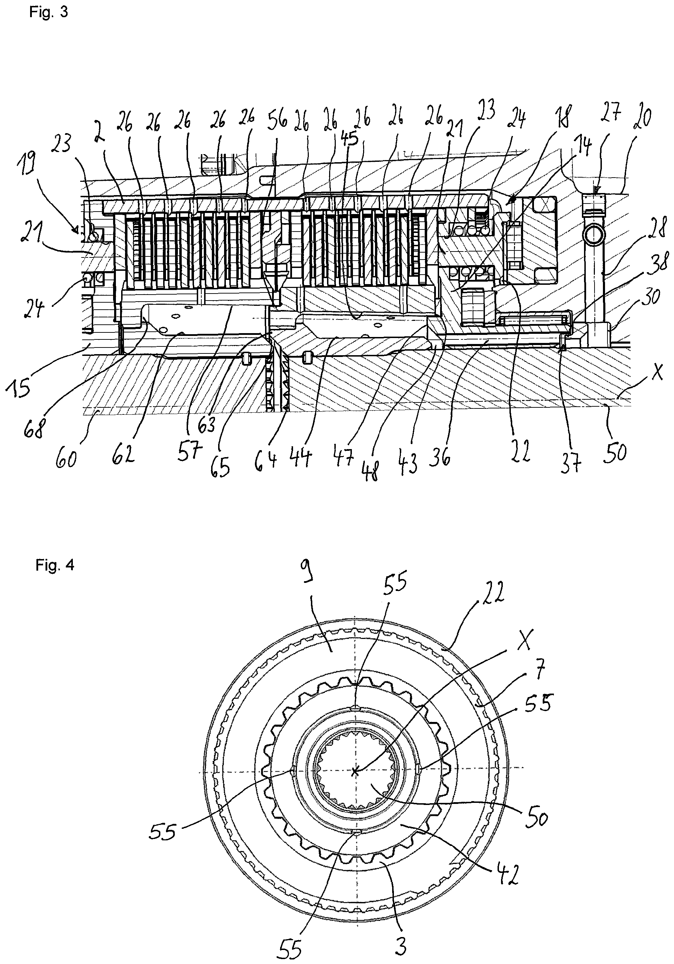

Die Reibungskupplungen 5, 6 sind insbesondere als nasslaufende Lamellenkupplungen ausgebildet. Zur deren Fluidversorgung werden die Lamellenpakete 7, 8 mit Kühl- und/oder Schmiermittel, welches im Weiteren als Kühlmittel bezeichnet wird, das über in den Innenlamellenträgern 3, 4 gestaltete Austrittskanäle 25', 25" in den Kupplungsraum 13 abgegeben wird, versorgt. Das von radial innen abgegebene Kühlmittel wird durch die Zentrifugalkräfte durch die Lamellenpakete 7, 8 hindurchgeleitet und über im Außenlamellenträger 2 gestaltete Ablaufkanäle 26 nach radial außen abgeleitet. Vorzugsweise sind die jeweiligen Kanäle 25', 25", 26 jeweils in einem Zahngrund einer Zahnlücke des Innenlamellenträgers 3, 4 beziehungsweise des Außenlamellenträgers 2 angeordnet. Entsprechend können die Austrittskanäle 25', 25" des jeweiligen Innenlamellenträgers 3, 4 zu den Ablaufkanälen 26 im Außenlamellenträger 2 axial versetzt sein, wie es in Figur 3 gezeigt ist. Das Kühlmittel wird aufgrund einer geneigten Oberseite des Kupplungsgehäuses 20 nach unten, in einen Sumpf 67, abgeführt. Weiterhin kann eine Fördereinrichtung (nicht gezeigt) vorhanden sein, die das Kühlmittel aus dem Sumpf 67 einer zentralen Ölzufuhr 27 zuführt. Das Kühlmittel kann beispielsweise durch die Hydraulikpumpe gefördert werden, die bereits zur Betätigung der Reibungskupplungen 5, 6 eingesetzt wird. Alternativ kann beispielsweise zur aktiven Förderung eine separate Pumpe oder zur passiven Förderung ein Zahnrad mit Abscheider eingesetzt werden.

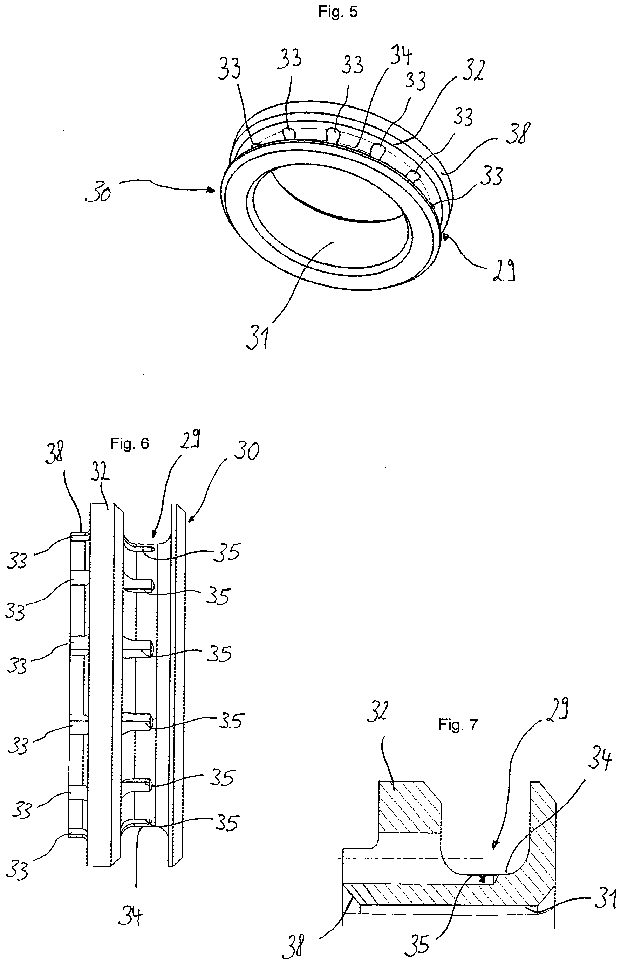

Die zentrale Ölzufuhr 27 weist einen im Kupplungsgehäuse 20 ausgebildeten Speisekanal 28 auf. Der Speisekanal 28 ist hier als ein radial verlaufender Kanal ausgebildet, über den das, hier gepumpte, Kühlmittel von radial außen nach radial innen führt. Am radial inneren Ende des Speisekanals 28 mündet dieser in einer in Umfangsrichtung um die Drehachse X umlaufenden Sammelnut 29 eines Umlenkringes 30. Der Umlenkring 30 ist in den Figuren 5 bis 7 im Detail gezeigt. Der Umlenkring 30 ist in einer Ausnehmung des Kupplungsgehäuses 20 eingesetzt und dichtet den Speisekanal 28 zur Seitenwelle 50 hin weitestgehend ab. Der Umlenkring 30 ist relativ zum Kupplungsgehäuse 20 ortsfest gehalten und weist eine zentrale Öffnung 31 zur Aufnahme der, hier, rechten Seitenwelle 50, unter Spiel auf. In einer die Sammelnut 29 axial begrenzenden und in Umfangsrichtung umlaufenden Wand 32 sind mehrere in Umfangsrichtung verteilt angeordnete Übergabebohrungen 33 gestaltet, die in axialer Richtung ausgerichtet sind. In der Figur 7 ist erkennbar, dass die Übergabebohrungen 33 gegenüber einem Boden 34 der Sammelnut 29 radial weiter innenliegend ansetzen und somit im Bereich der Sammelnut 29 einen rinnenförmigen Einlaufbereich 35 bilden.

Axial zwischen dem Umlenkring 30 und dem ersten Innenlamellenträger 3 ist die rechte Abdeckung 14 angeordnet, die drehfest mit dem Außenlamellenträger 2 verbunden ist. In der Abdeckung 14 sind mehrere, in Umfangsrichtung verteilt angeordnete Übernahmebohrungen 36 ausgebildet, die axial ausgerichtet sind. Um die Übergabebohrungen 33 mit den Übernahmebohrungen 36 flüssigkeitsleitend zu verbinden, ist eine erste Drehdurchführung 37 vorgesehen. Die erste Drehdurchführung 37 ist durch einen axialen Vorsprung 38 des Umlenkringes 30 sowie durch einen zum Umlenkring 30 hin offenen Ringraum 39 der Abdeckung 14 gebildet. Der Ringraum 39 ist radial zwischen einer radial äußeren Wand 40 der Abdeckung 14 und der Oberfläche der rechten Seitenwelle 50 begrenzt. Der Umlenkring 30 ragt mit dessen axialen Vorsprung 38 in den Ringraum 39 hinein. Die Übergabebohrungen 33 des Umlenkringes 30 und die Übernahmebohrungen 36 der Abdeckung 14 sind derart zueinander angeordnet, dass sie während einer Umdrehung der Abdeckung 14 um die Drehachse X mindestens einmal, hier sechszehn Mal, vorübergehend flüssigkeitsleitend miteinander verbunden sind. Lediglich beispielhaft sind hier sechszehn Übergabebohrungen 33 und sechszehn Übernahmebohrungen 36 vorgesehen, wobei grundsätzlich auch jeweils mehr oder weniger als sechszehn Bohrungen vorgesehen sein können. Ebenso kann sich auch die Anzahl an Übergabebohrungen 33 von der Anzahl an Übernahmebohrungen 36 unterscheiden.

An einem dem ersten Innenlamellenträger 3 zugewandten Ende münden die Übernahmebohrungen 36 in einen ersten Verteilerkanal 41, der im ersten Innenlamellenträger 3 ausgebildet ist. Der erste Verteilerkanal 41 ist als ein sich axial erstreckender Ringspalt gebildet, der radial durch eine radial innere Kanalwand 44 des ersten Innenlamellenträgers 3 und eine radial äußere Kanalwand 45 des ersten Innenlamellenträgers 3 begrenzt ist. Die Abdeckung 14 weist einen axialen Vorsprung 42 auf, der durch eine seitliche Einlauföffnung 43 des ersten Verteilerkanals 41 in diesen hineinragt. Die Einlauföffnung 43 ist ringförmig gestaltet. Der Außenradius des Vorsprunges 42 ist entsprechend kleiner als der radiale Abstand der radial äußeren Kanalwand 45 zur Drehachse X. Durch den axialen Vorsprung 42 der Abdeckung 14 und den sich axial mit dem Vorsprung 42 überlappenden Abschnitt des ersten Verteilerkanals 41 ist eine zweite Drehdurchführung 51 gebildet, um die Übernahmebohrungen 36 mit dem ersten Verteilerkanal 41 flüssigkeitsleitend zu verbinden. Konkret treten die Übernahmebohrungen 36 der Abdeckung 14 durch Übergabeöffnungen 46 aus, die an einer dem ersten Innenlamellenträger 3 zugewandten Axialseite der Abdeckung 14 ausgebildet sind. Die Übergabeöffnungen 46 sind von einer Stirnseite 47 des axialen Vorsprunges 42 axial beabstandet und gegenüber dieser zurückgestellt. Zwischen der Stirnseite 47 und der Vorderseite, in der die Übergabeöffnungen 46 liegen, ist ein Ringraum 48 gebildet, über den das Kühlmittel in den ersten Verteilerkanal 41 geleitet wird. Die Wand 40 der Abdeckung 14 ist im Bereich des Ringraums 48 angefast, wobei sich die Fase hin zum ersten Verteilerkanal 41 öffnet. Die den ersten Verteilerkanal 41 radial innen begrenzende Kanalwand 44 ist ebenfalls angefast, wobei die Fase der inneren Kanalwand 44 parallel zur Fase der Wand 40 des Ringraumes 48 verläuft. Die Übernahmebohrungen 36 verlaufen im Vergleich zum ersten Verteilerkanal 41 radial weiter innen, sodass das Kühlmittel durch Zentrifugalkräfte entlang der angefasten Wand 40 in den ersten Verteilerkanal 41 strömt.

Eine Oberfläche der radial äußeren Kanalwand 45 liegt in einer gedachten Mantelfläche, die den ersten Verteilerkanal 41 radial außenseitig begrenzt. Die Mantelfläche ist kegelstumpfförmig ausgebildet. Dagegen verläuft die radial innere Kanalwand 44 parallel zur Drehachse X. Der Abstand der radial außenseitigen Mantelfläche zur Drehachse X nimmt in axialer Richtung zu. Auf diese Weise weitet sich der erste Verteilerkanal 41 in Flussrichtung des Kühlmittels radial nach außen auf. Die Flussrichtung ist in Figur 2 mit dem Pfeil F angedeutet. Im Betrieb der Doppelkupplungseinheit 1 wird das Kühlmittel somit durch die Zentrifugalkraft an der radial äußeren Kanalwand 45 durch den ersten Verteilerkanal hin zu einem zweiten Verteilerkanal 52 gefördert. Ein Öffnungswinkel α zwischen Mantellinien M der Mantelfläche und der Drehachse X beträgt, hier, etwa 2°, wobei der Öffnungswinkel α öffnet sich vorzugsweise sich in Flussrichtung F des Kühlmittels, das heißt in einer Richtung hin zum zweiten Verteilerkanal 52. In der Figur 2 ist der Öffnungswinkel α zwischen einer der Mantellinien M und der Drehachse X anhand einer Parallelprojektion P der Drehachse X gezeigt.

In der radial äußeren Kanalwand 45 des ersten Verteilerkanals 41 sind Austrittsöffnungen 53 ausgebildet, die in die Austrittskanäle 25' im ersten Verteilerkanal 41 münden. Die Austrittsöffnungen 53 sind auf einer konzentrisch zur Drehachse X angeordneten, gedachten Spirale angeordnet. Der Durchmesser der jeweiligen Austrittsöffnungen 53 untereinander nimmt in Flussrichtung F zu. Entsprechend weist die der Einlauföffnung 43 nächstliegende Austrittsöffnung 53 den kleinsten Durchmesser und Austrittsöffnung 53 den größten Durchmesser auf. Entsprechend kann auch der Durchmesser der jeweiligen Ablaufkanäle 26 im Außenlamellenträger 2 gestaltet sein, um eine lokale Unterversorgung, Überversorgung oder einen Stau des Kühl- und Schmiermittels zu verhindern. Insbesondere kann zumindest eine Teilmenge der Ablaufkanäle 26 entlang des ersten Lamellenpaktes 7 einen kleineren Durchmesser aufweisen als zumindest eine Teilmenge der Ablaufkanäle 26 entlang des zweiten Lamellenpaktes 8.

Der erste Verteilerkanal 41 mündet in mehrere, in Umfangsrichtung verteilt angeordnete Durchtrittsbohrungen 54. Die Durchtrittsbohrungen 54 sind im ersten Innenlamellenträger 3 ausgebildet. Eine Bohrlängsachse L der jeweiligen Durchtrittsbohrungen 54 schließt mit der Drehachse X einen Winkel ein, der dem Öffnungswinkel α entspricht. In der radial äußeren Kanalwand 45 des ersten Verteilerkanals 41 sind mehrere in Umfangsrichtung beabstandet ausgebildete Vertiefungen 55 vorgesehen. Die Vertiefungen 55 erstrecken sich in axialer Richtung, wobei die Vertiefungen 55 an der Einlauföffnung 43 beginnen und jeweils in einer der Durchtrittsbohrungen 54, hier bündig, münden. Die Vertiefungen 55 weisen über deren Länge eine konstante Tiefe auf. Lediglich beispielhaft sind hier vier der Durchtrittsbohrungen 54 und entsprechend vier der Vertiefungen 55 im ersten Innenlamellenträger 3 gezeigt.

Die Durchtrittsbohrungen 54 erstrecken sich durch einen axialen Vorsprung 56 des ersten Innenlamellenträgers 3, der durch eine, konzentrisch zur Drehachse X angeordnete, Ringöffnung 49 des zweiten Innenlamellenträgers 4 in den zweiten Verteilerkanal 52 hineinragt. Der zweite Verteilerkanal 52 ist als ein sich axial erstreckender Ringspalt gebildet, der durch eine radial innere Kanalwand 62 des zweiten Innenlamellenträgers 4 und eine radial äußere Kanalwand 57 des zweiten Innenlamellenträgers 4 begrenzt ist. Der Au ßenradius des Vorsprunges 56 ist kleiner als der radiale Abstand der radial äußeren Kanalwand 57 des zweiten Verteilerkanals 52 zur Drehachse X. Die Durchtrittsbohrungen 54 treten an einer Stirnseite 58 des axialen Vorsprunges 56 aus und münden somit innerhalb des zweiten Verteilerkanals 52. Durch den axialen Vorsprung 56 des ersten Innenlamellenträgers 3 und den sich axial mit dem Vorsprung 56 überlappenden Abschnitt des zweiten Verteilerkanals 52 ist somit eine dritte Drehdurchführung 59 gebildet, um die Durchtrittsbohrungen 54 mit dem zweiten Verteilerkanal 52 flüssigkeitsleitend zu verbinden. Zur Abdichtung der dritten Drehdurchführung 59 nach radial außen ist ein Ring 61 auf den axialen Vorsprung 56 des ersten Innenlamellenträgers 3 aufgeschoben. Der zweite Innenlamellenträger 4 stützt sich über den Ring 61 axial am ersten Innenlamellenträger 3 ab. Somit kann der Ring 61 auch als Abstandhalter bezeichnet werden. Der Ring 61 weist eine gleitfähige Oberfläche auf und kann beispielsweise ein Bronzering sein. Die radial innere Kanalwand 62 des zweiten Verteilerkanals 52 und eine der inneren Kanalwand 62 zugewandten Außenwand 63 des Vorsprungs 56 des ersten Innenlamellenträgers 3 weisen einander gegenläufig ausgebildete Fasen 64, 65 auf. Die Fasen 64, 65 sind axial voneinander beabstandet, wobei der axiale Abstand zumindest in etwa der Dicke des Ringes 61 entspricht.

Eine Oberfläche der radial äußeren Kanalwand 57, die den zweiten Verteilerkanal 52 radial außenseitig begrenzt, liegt in einer gedachten Mantelfläche. Die Mantelfläche ist, wie diejenige des ersten Verteilerkanals 41, kegelstumpfförmig ausgebildet. Dagegen verläuft die radial innere Kanalwand 62 parallel zur Drehachse X. Auf diese Weise weitet sich der zweite Verteilerkanal 52 ebenfalls in Flussrichtung des Kühlmittels radial nach außen auf. Die Flussrichtung ist in Figur 2 mit dem Pfeil F angedeutet. Durch den in axialer Richtung zunehmenden Abstand der radial außenseitigen Mantelfläche zur Drehachse X wird das Kühlmittel durch die Zentrifugalkraft an der radial äußeren Kanalwand 62 durch den zweiten Verteilerkanal 52 gefördert. Der Öffnungswinkel α zwischen Mantellinien M der Mantelfläche des zweiten Verteilerkanals 52 und der Drehachse X und der Öffnungswinkel α zwischen Mantellinien M der Mantelfläche des ersten Verteilerkanals 41 und der Drehachse X ist, hier, identisch, das heißt etwa 2°. Beide Öffnungswinkel α öffnen sich in Flussrichtung F des Kühlmittels.

In der radial äußeren Kanalwand 57 des zweiten Verteilerkanals 52 sind ebenfalls Austrittsöffnungen 66 ausgebildet, die in die Austrittskanäle 25" im zweiten Innenlamellenträger 4 münden. Die Austrittsöffnungen 66 sind auf einer konzentrisch zur Drehachse X angeordneten, gedachten Spirale angeordnet. Der Durchmesser der jeweiligen Austrittsöffnungen 66 untereinander nimmt in Flussrichtung F zu. Entsprechend weist die der Ringöffnung 49 nächstliegende Austrittsöffnung 66 den kleinsten Durchmesser auf, wobei die von der Ringöffnung 49entfernteste Austrittsöffnung 66 den größten Durchmesser aufweist.

Der zweite Verteilerkanal 52 ist an einem von der Ringöffnung 49 abgewandten Ende 68 verschlossen. Somit kann, bei Rotation des zweiten Innenlamellenträgers 4, das in den zweiten Verteilerkanal 52 strömende Kühlmittel diesen nur über die Austrittskanäle 25" zur Beölung des zweiten Lamellenpaketes 8 verlassen.

Im Betrieb wird das Kühlmittel aus dem Sumpf 67 zur zentralen Ölzufuhr 27 gefördert, beispielsweise mittels einer (nicht gezeigten) Ölpumpe, und dort durch den im Kupplungsgehäuse 20 ausgebildeten Speisekanal 28 nach radial innen gepumpt. Aus dem offenen Ende des Speisekanals 28 strömt das Kühlmittel in die Sammelnut 29 des Umlenkringes 30 und wird dort durch die axial ausgerichteten Übergabebohrungen 33 axial umgelenkt. Das Kühlmittel strömt durch die erste Drehdurchführung 37 in die, in der rechten Abdeckung 14 gestalteten, Übernahmebohrungen 36, die sich bei Rotation des Außenlamellenträgers 2 um die Drehachse X drehen. Am dem ersten Innenlamellenträger 3 zugewandten axialen Ende der Übernahmebohrungen 36 strömt das Kühlmittel durch die zweiten Drehdurchführung 51 in den ersten Verteilerkanal 41. Wenn der erste Innenlamellenträger 3 um die Drehachse X rotiert, wird das Kühlmittel aufgrund der Fliehkräfte an die radial äußere Kanalwand 45 gedrückt und strömt den sich in axialer Richtung aufweitenden ersten Verteilerkanal 41 in einer Richtung hin zu den Durchtrittsbohrungen 54. Eine erste Teilmenge des Kühlmittels gelangt dabei zur Beölung des ersten Lamellenpaketes 7 durch die, auf der gedachten Spirale angeordneten, Austrittsöffnungen 53 in die Austrittskanäle 25`. Eine zweite Teilmenge des Kühlmittels wird über die rinnenartige Vertiefung 55 direkt den Durchtrittsbohrungen 54 zugeführt. In der Vertiefung 55 sind folglich keine Austrittsöffnungen 53 für die Austrittskanäle 25` ausgebildet. Die zweite Teilmenge des Kühlmittels wird somit durch die Durchtrittsbohrungen 54 über die dritte Drehdurchführung 59 in den zweiten Verteilerkanal 52 gedrückt. Wenn der zweite Innenlamellenträger 4 um die Drehachse X rotiert, wird das Kühlmittel aufgrund der Fliehkräfte an die radial äußere Kanalwand 57 gedrückt und strömt den sich in axialer Richtung aufweitenden zweiten Verteilerkanal 52 in einer Richtung hin zu dem verschlossenen Ende 68 des zweiten Verteilerkanals 52. Auf dem Weg dorthin strömt das Kühlmittel zur Beölung des zweiten Lamellenpaketes 8 durch die, auf der gedachten Spirale angeordneten, Austrittsöffnungen 66 in die Austrittskanäle 25". Anschließend strömt das Kühlmittel bei Rotation des ersten Innenlamellenträgers 3 beziehungsweise des zweiten Innenlamellenträgers 4 durch das jeweilige Lamellenpaket 7, 8 und gelangt am radial außenseitigen Ende des Kupplungsraumes 13 durch die im Außenlamellenträger 2 ausgebildeten Ablaufkanäle 26 zurück in den Sumpf 67. Hierzu kann das aus den Ablaufkanälen 26 ausströmende Kühlmittel an einer Gehäusewand des stillstehenden Kupplungsgehäuses 20 in den Sumpf 67 abgeleitet werden.

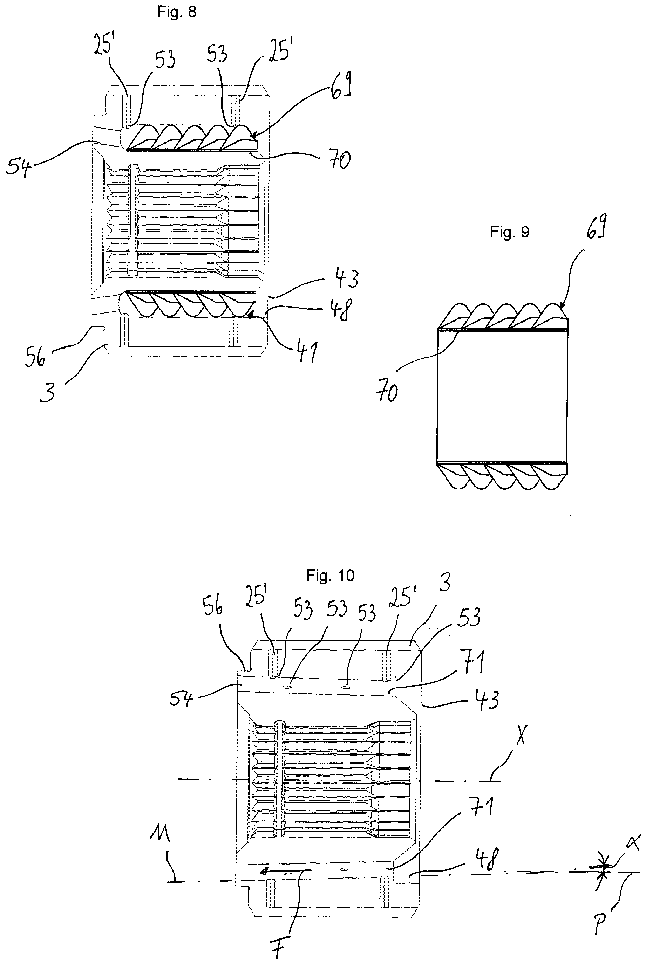

Die Figur 8 zeigt einen vergrößerten Teilausschnitt einer erfindungsgemäßen Doppelkupplungseinheit in einer abgewandelten Ausführungsform. Diese Ausführungsform entspricht weitestgehend derjenigen gemäß den Figuren 1 bis 7, auf deren Beschreibung insofern Bezug genommen wird. Dabei sind gleiche Einzelheiten mit gleichen Bezugszeichen versehen wie in den Figuren 1 bis 7. In der Figur 8 ist zur Verdeutlichung des einzigen Unterschiedes gegenüber der Ausführungsform gemäß den Figuren 1 bis 7, hier, der erste Innenlamellenträger 3 im Detail dargestellt.

Erkennbar ist, dass die radial äußere Kanalwand 45 des ersten Verteilerkanals 41 parallel zur Drehachse X und damit auch parallel zur radialen inneren Kanalwand 44 des ersten Verteilerkanals 41 verläuft. Weiterhin ist im ersten Verteilerkanal 41 eine archimedische Schraube 69 eingesetzt, die mit dem ersten Innenlamellenträger 3 drehfest verbunden ist. Mittels der archimedischen Schraube 69 kann, nach dem an sich bekannten Prinzip einer Schneckenpumpe, bei Rotation des ersten Innenlamellenträgers 3 das im Betrieb der Doppelkupplungseinheit durch die Einlauföffnung 43 in den ersten Verteilerkanal 41 einströmende Kühlmittel hin zu den Durchtrittsbohrungen 54 gefördert werden.

Die archimedische Schraube 69 ist in der Figur 9, zur Verdeutlichung deren Aufbaus, als einzelnes Bauteil dargestellt. Die archimedische Schraube 69 weist eine zylindrische Bohrung 70 auf, sodass die archimedische Schraube 69 durch die Einlauföffnung 43 in den ersten Verteilerkanal 41 eingesetzt werden kann. Der Innendurchmesser der zylindrischen Bohrung 69 entspricht, zumindest in etwa, dem Außendurchmesser der radial inneren Kanalwand 44. Der Außendurchmesser der archimedischen Schraube 69 entspricht, zumindest in etwa, dem Innendurchmesser der radial äußeren Kanalwand 45. Zwischen den einzelnen Blattabschnitten der archimedischen Schraube 69 sind Kammern gebildet, in denen das Kühlmittel hin zu den Durchtrittsbohrungen 54 geschraubt werden kann. Dabei wird das Kühlmittel auch an den Austrittskanälen 25' vorbeigeführt, durch welches eine Teilmenge des Kühlmittels in den Kupplungsraum 13 zur Beölung des ersten Lamellenpaketes 8 geleitet wird. Optional können auch die aus der Ausführungsform gemäß den Figuren 1 bis 7 bekannten Vertiefungen 55 zusammen mit der archimedischen Schraube 69 verwendet werden.

In analoger Weise kann auch der zweite Innenlamellenträger 4 eine archimedische Schraube 69 aufweisen. Auf diese Weise kann, bei Rotation des zweiten Innenlamellenträgers 4, das im Betrieb vom ersten Verteilerkanal 41 über die Durchtrittsbohrungen 54 in den zweiten Verteilerkanal 52 einströmende Kühlmittel den Austrittskanälen 25" im zweiten Innenlamellenträger 4 zur Beölung des zweiten Lamellenpaketes 8 zugeführt werden.

Die Figur 10 zeigt einen vergrößerten Teilausschnitt einer erfindungsgemäßen Doppelkupplungseinheit in einer weiteren Ausführungsform. Diese Ausführungsform entspricht weitestgehend derjenigen gemäß den Figuren 1 bis 7, auf deren Beschreibung insofern Bezug genommen wird. Dabei sind gleiche Einzelheiten mit gleichen Bezugszeichen versehen wie in den Figuren 1 bis 7. In der Figur 10 ist zur Verdeutlichung des einzigen Unterschiedes gegenüber der Ausführungsform gemäß den Figuren 1 bis 7, hier, der erste Innenlamellenträger 3 im Detail dargestellt.

Der erste Innenlamellenträger 3 unterscheidet dadurch, dass mehrere erste Verteilerkanäle 71 vorgesehen sind. Die ersten Verteilerkanäle 71 sind als Bohrungen ausgebildet und in Umfangsrichtung um die Drehachse X verteilt angeordnet. Die ersten Verteilerkanäle 71 erstrecken sich von der als Ringspalt geformten Einlauföffnung 43 hin zu den einzelnen Durchtrittsbohrungen 54. Jeder der ersten Verteilerkanäle 71 mündet in einer dem jeweiligen ersten Verteilerkanal 71 zugeordneten Durchtrittsbohrung 54. Vorzugsweise bildet das Paar aus erstem Verteilerkanal 71 und zugeordneter Durchtrittsbohrung 54 eine durchgehende Bohrung mit einer gemeinsamen Bohrlochlängsachse A aus. Die jeweilige Bohrlochlängsachse A schließt mit der Drehachse X einen Öffnungswinkel α ein, der hier etwa 2° beträgt. Der Öffnungswinkel α öffnet sich vorzugsweise sich in Flussrichtung F des Kühlmittels, das heißt in einer Richtung weg von der Einlauföffnung 43. In den ersten Verteilerkanälen 71 ist zumindest ein Austrittskanal 25' vorgesehen. Vorzugsweise weist jeder der ersten Verteilerkanäle 71 mehrere der Austrittskanäle 25' auf. Insbesondere sind die Austrittskanäle 25' über alle ersten Verteilerkanäle 71 hinweg auf einer gedachten Spirale angeordnet. Die Austrittskanäle 25' können radial oder windschief zur Drehachse X ausgerichtet sein. Optional können auch die aus der Ausführungsform gemäß den Figuren 1 bis 7 bekannten Vertiefungen 55 in den einzelnen ersten Verteilerkanälen 71 verwendet werden, um eine Teilmenge des Kühlmittels an den Austrittskanälen 25' vorbei hin zu den Durchtrittsbohrungen 54 zu fördern.

In analoger Weise kann auch der zweite Innenlamellenträger 4 mehrere der in Umfangsrichtung um die Drehachse X verteilt angeordneten Bohrungen aufweisen, die die zweiten Verteilerkanäle bilden. Die zweiten Verteilerkanäle sind dann, wie der zweite Verteilerkanal 52 gemäß der in den Figuren 1 bis 7 gezeigten Ausführungsform, an den vom ersten Innenlamellenträger 3 abgewandten Enden 68 verschlossen. Somit kann das Kühlmittel bei Rotation des zweiten Innenlamellenträgers 4 aus den zweiten Verteilerkanäle nur über die Austrittskanäle 25" in das zweite Lamellenpaket 8 ausströmen.

### Bezugszeichenliste

- 1: Doppelkupplungseinheit
- 2: Außenlamellenträger
- 3: Innenlamellenträger
- 4: Innenlamellenträger
- 5: Reibungskupplung
- 6: Reibungskupplung
- 7: Lamellenpaket
- 8: Lamellenpaket
- 9: Druckplatte
- 10: Druckplatte
- 11: Stützelement
- 12: Stützelement
- 13: Kupplungsraum
- 14: Abdeckung
- 15: Abdeckung
- 16: Öffnung
- 17: Öffnung
- 18: Aktuatoreinheit
- 19: Aktuatoreinheit
- 20: Kupplungsgehäuse
- 21: Kolben
- 22: Zylinderkammer
- 23: Öffnung
- 24: Rückstellfeder
- 25: Austrittskanal
- 26: Ablaufkanal
- 27: zentrale Ölzufuhr
- 28: Speisekanal
- 29: Sammelnut
- 30: Umlenkring
- 31: Öffnung
- 32: Wand
- 33: Übergabebohrung
- 34: Boden
- 35: Einlaufbereich
- 36: Übernahmebohrung
- 37: erste Drehdurchführung
- 38: Vorsprung
- 39: Ringraum
- 40: Wand
- 41: erster Verteilerkanal
- 42: Vorsprung
- 43: Einlauföffnung
- 44: innere Kanalwand
- 45: äußere Kanalwand
- 46: Übergabeöffnung
- 47: Stirnseite
- 48: Ringraum
- 49: Ringöffnung
- 50: Seitenwelle
- 51: zweite Drehdurchführung
- 52: zweiter Verteilerkanal
- 53: Austrittsöffnung
- 54: Durchtrittsbohrung
- 55: Vertiefung
- 56: Vorsprung
- 57: äußere Kanalwand
- 58: Stirnseite
- 59: dritte Drehdurchführung
- 60: Seitenwelle
- 61: Ring
- 62: innere Kanalwand
- 63: Außenwand
- 64: Fase
- 65: Fase
- 66: Austrittsöffnung
- 67: Sumpf
- 68: Ende
- 69: archimedische Schraube
- 70: Bohrung
- 71: Verteilerkanal

- α: Öffnungswinkel
- A: Bohrlochlängsachse
- F: Flussrichtung
- L: Bohrlängsachse
- M: Mantellinie
- P: Parallelprojektion
- X: Drehachse

## Patentansprüche

1. Doppelkupplungseinheit zur variablen Drehmomentverteilung auf zwei Ausgangswellen, umfassend:
einen um eine Drehachse (X) drehend antreibbaren Außenlamellenträger (2),
einen ersten Innenlamellenträger (3),
ein erstes Lamellenpaket (7) zur Drehmomentübertragung zwischen dem Au-ßenlamellenträger (2) und dem ersten Innenlamellenträger (3),
einen zweiten Innenlamellenträger (4), wobei der erste Innenlamellenträger (3) und der zweite Innenlamellenträger (4) relativ zueinander um die Drehachse (X) drehbar angeordnet sind,
ein zweites Lamellenpaket (8) zur Drehmomentübertragung zwischen dem Außenlamellenträger (2) und dem zweiten Innenlamellenträger (4),
wobei die Doppelkupplungseinheit weiterhin aufweist:
eine zentrale Ölzufuhr (27) zur Versorgung des ersten Lamellenpaktes (7) und des zweiten Lamellenpaktes (8) mit Kühlmittel,
einen ersten Verteilerkanal (41), der im ersten Innenlamellenträger (3) ausgebildet ist und eine Einlauföffnung (43) aufweist, über die der erste Verteilerkanal (41) mit der zentralen Ölzufuhr (27) flüssigkeitsleitend verbunden ist,
einen zweiten Verteilerkanal (52), der im zweiten Innenlamellenträger (4) ausgebildet und über den ersten Verteilerkanal (41) mit der zentralen Ölzufuhr (27) flüssigkeitsleitend verbunden ist, und
Austrittskanäle (25), die im ersten Innenlamellenträger (3) zur Leitung des Kühlmittels in das erste Lamellenpaket (7) und im zweiten Innenlamellenträger (4) zur Leitung des Kühlmittels in das zweite Lamellenpaket (8) ausgebildet sind, und
der erste Innenlamellenträger (3) zumindest eine Durchtrittsbohrung (54) aufweist, über die der zweite Verteilerkanal (52) mit dem ersten Verteilerkanal (41) flüssigkeitsleitend verbunden ist,
**dadurch gekennzeichnet,**
**dass** eine Bohrlochlängsachse (L) der zumindest einen Durchtrittsbohrung (54) mit der Drehachse (X) einen Bohrungswinkel (α) einschließt.

2. Doppelkupplungseinheit nach Anspruch 1, **dadurch gekennzeichnet, dass** der erste Innenlamellenträger (3) einen axialen Vorsprung (56) mit der zumindest einen Durchtrittsbohrung (54) aufweist, wobei der Vorsprung (56) in den zweiten Verteilerkanal (52) hineinragt, und der zweite Verteilerkanal (52) zumindest in einem Bereich axialer Überlappung mit dem Vorsprung (56) als ein sich in axialer Richtung erstreckender Ringspalt gestaltet ist.

3. Doppelkupplungseinheit nach Anspruch 1 oder 2, **dadurch gekennzeichnet, dass** der Bohrungswinkel (α) zwischen 0,01° und 10° beträgt.

4. Doppelkupplungseinheit nach einem der Ansprüche 1 bis 3, **dadurch gekennzeichnet, dass** in dem ersten Verteilerkanal (41) Leitmittel (55) zur Leitung einer Teilmenge des Kühlmittels hin zur zumindest einen Durchtrittsbohrung (54) ausgebildet sind.

5. Doppelkupplungseinheit nach Anspruch 4, **dadurch gekennzeichnet, dass** die Leitmittel mindestens eine längliche Vertiefung (55) aufweisen, die sich über mindestens 20% der axialen Längserstreckung des ersten Verteilerkanals (41) erstreckt und in der zumindest einen Durchtrittsbohrung (54) mündet.

6. Doppelkupplungseinheit nach einem der Ansprüche 1 bis 5, **dadurch gekennzeichnet, dass** der erste Innenlamellenträger (3) und der zweite Innenlamellenträger (4) axial gegeneinander abgestützt sind.

7. Doppelkupplungseinheit nach einem der Ansprüche 1 bis 6, **dadurch gekennzeichnet, dass** der erste Verteilerkanal (41) und/oder der zweite Verteilerkanal (52) jeweils als ein sich in axialer Richtung erstreckender und konzentrisch zur Drehachse (X) angeordneter Ringspalt ausgebildet sind/ist.

8. Doppelkupplungseinheit nach einem der Ansprüche 1 bis 7, **dadurch gekennzeichnet, dass** in einer radial äußeren Kanalwand (45) des ersten Verteilerkanals (41) und in einer radial äußeren Kanalwand (57) des zweiten Verteilerkanals (52) jeweils Austrittsöffnungen (53, 66) ausgebildet sind, die in die Austrittskanäle (25) münden, wobei die Austrittsöffnungen (53, 66) auf einer konzentrisch zur Drehachse (X) angeordneten, gedachten Spirale vorgesehen sind.

9. Doppelkupplungseinheit nach einem der Ansprüche 1 bis 8, **dadurch gekennzeichnet, dass** eine den ersten Verteilerkanal (41) radial außenseitig begrenzende Mantelfläche und/oder eine den zweiten Verteilerkanal (52) radial außenseitig begrenzende Mantelfläche kegelstumpfförmig ausgebildet sind/ist.

10. Doppelkupplungseinheit nach Anspruch 9, **dadurch gekennzeichnet, dass** ein Öffnungswinkel (α) zwischen Mantellinien (M) der jeweiligen Mantelfläche und der Drehachse (X) zwischen 0,01° und 10° beträgt und der jeweilige Öffnungswinkel (α) sich in Flussrichtung (F) des Kühlmittels öffnet.

11. Doppelkupplungseinheit nach einem der Ansprüche 1 bis 10, **dadurch gekennzeichnet, dass** ein Umlenkring (30) eingangsseitig mit der zentralen Ölzufuhr (27) und ausgangsseitig mit dem ersten Verteilerkanal (41) flüssigkeitsleitend verbunden ist, wobei der Umlenkring (30) eine in Umfangsrichtung offen gestaltete Sammelnut (29) und mehrere in Umfangsrichtung verteilt angeordnete Übergabebohrungen (33), die zumindest im Wesentlichen axial ausgerichtet und mit der Sammelnut (29) flüssigkeitsleitend verbunden sind.

12. Doppelkupplungseinheit nach Anspruch 11, **dadurch gekennzeichnet, dass** seitlich am Außenlamellenträger (2) eine Abdeckung (14) drehfest angeordnet ist, die mehrere in Umfangsrichtung um die Drehachse (X) verteilt angeordnete Übernahmebohrungen (36) aufweist, die mit dem ersten Verteilerkanal (41) flüssigkeitsleitend verbunden sind, wobei die Übernahmebohrungen (36) der Abdeckung (14) und die Übergabeöffnungen (33) des Umlenkringes (30) derart zueinander angeordnet sind, dass die Übergabebohrungen (33) und die Übernahmebohrungen (36) während einer Umdrehung der Abdeckung (14) um die Drehachse (X) mindestens einmal vorübergehend flüssigkeitsleitend miteinander verbunden sind.

13. Doppelkupplungseinheit nach Anspruch 12, **dadurch gekennzeichnet, dass** die Abdeckung (14) des Außenlamellenträgers (2) zur Bildung einer Drehdurchführung (51) zwischen den Übernahmebohrungen (36) der Abdeckung (14) und dem ersten Verteilerkanal (41) des ersten Innenlamellenträgers (3) in den ersten Verteilerkanal (41) hineinragt.

14. Antriebsanordnung zum Antreiben einer Antriebsachse eines Kraftfahrzeuges, umfassend:
eine Antriebsmaschine mit einer Motorwelle,
zwei konzentrisch zueinander angeordnete Ausgangswellen (50, 60) und
eine im Leistungspfad zwischen der Antriebsmaschine und den zwei Ausgangswellen (50, 60) angeordnete Kupplungseinheit (1),
**dadurch gekennzeichnet,**
**dass** die Kupplungseinheit eine Doppelkupplungseinheit (1) nach einem der Ansprüche 1 bis 13 ist,
wobei die Motorwelle den Außenlamellenträger (2) drehend antreibt, und
wobei eine erste der beiden Ausgangswellen (50) mit dem ersten Innenlamellenträger (3) und eine zweite der beiden Ausgangswellen (60) mit dem zweiten Innenlamellenträger (4) drehfest verbunden ist.

## Claims

1. Dual clutch unit for variable torque distribution on two output shafts, comprising:
an outer disk carrier (2) rotationally driven about a rotation axis (X),
a first inner disk carrier (3),
a first disk pack (7) for torque transmission between the outer disk carrier (2) and the first inner disk carrier (3),
a second inner disk carrier (4), wherein the first inner disk carrier (3) and the second inner disk carrier (4) are arranged rotatably relative to each other about the rotation axis (X),
a second disk pack (8) for torque transmission between the outer disk carrier (2) and the second inner disk carrier (4),
wherein the dual clutch unit further comprises:
a central oil supply (27) to supply the first disk pack (7) and the second disk pack (8) with coolant,
a first distributor channel (41) being formed in the first inner disk carrier (3) and comprising a feed opening (43) through which the first distributor channel (41) is fluidly connected to the central oil supply (27),
a second distributor channel (52) being formed in the second inner disk carrier (4) and being fluidly connected to the central oil supply (27) via the first distributor channel (41), and
drain channels (25) being formed in the first inner disk carrier (3) to conduct the coolant into the first disk pack (7) and in the second inner disk carrier (4) to conduct the coolant into the second disk pack (8), and
the first inner disk carrier (3) comprises at least one through-bore (54) through which the second distributor channel (52) is fluidly connected to the first distributor channel (41),
**characterised in**
**that** a borehole longitudinal axis (L) of the at least one through-bore (54) encloses a bore angle (α) with the rotation axis (X).

2. Dual clutch unit according to claim 1, **characterised in that** the first inner disk carrier (3) comprises an axial protrusion (56) with the at least one through-bore (54), wherein the protrusion (56) projects into the
second distributor channel (52) and the second distributor channel (52) is designed as an axially extending annular passage at least in a region of axial overlap with the protrusion (56).

3. Dual clutch unit according to claim 1 or 2, **characterised in that** the bore angle (α) is between 0.01° and 10°.

4. Dual clutch unit according to one of claims 1 to 3, **characterised in that** guiding means (55) are formed in the first distributor channel (41) for guiding a partial quantity of the coolant towards the at least one through-bore (54).

5. Dual clutch unit according to claim 4, **characterised in that** the guiding means comprise at least one elongated recess (55) extending over at least 20% of the axial longitudinal extension of the first distributor channel (41) and opens into the at least one through-bore (54).

6. Dual clutch unit according to one of claims 1 to 5, **characterised in that** the first inner disk carrier (3) and the second inner disk carrier (4) are axially supported against each other.

7. Dual clutch unit according to one of claims 1 to 6, **characterised in that** the first distributor channel (41) and/or the second distributor channel (52) are each/is designed as an annular passage extending in the axial direction and being concentrically arranged to the rotation axis (X).

8. Dual clutch unit according to one of claims 1 to 7, **characterised in that** in a radially outer channel wall (45) of the first distributor channel (41) and in a radially outer channel wall (57) of the second distributor channel (52) outlet openings (53, 66) are formed which lead to the drain channels (25), wherein the outlet openings (53, 66) are arranged on an imaginary spiral arranged concentrically to the rotation axis (X).

9. Dual clutch unit according to one of claims 1 to 8, **characterised in that** an envelope surface delimiting the first distributor channel (41) radially outside and/or an envelope surface delimiting the second distributor channel (52) radially outside are/is designed frustoconically.

10. Dual clutch unit according to claim 9, **characterised in that** an aperture angle (α) between envelope lines (M) of the respective envelope surface and the rotation axis (X) is between 0.01° and 10° and that the respective aperture angle (α) opens in flow direction (F) of the coolant.

11. Dual clutch unit according to one of claims 1 to 10, **characterised in that** a deflector ring (30) is fluidly connected on its inlet side to the central oil supply (27) and on its outlet side to the first distributor channel (41), wherein the deflector ring (30) has a collecting groove (29) being circumferentially open and a plurality of transfer bores (33), which are circumferentially distributed and at least substantially axially aligned and fluidly connected to the collecting groove (29).

12. Dual clutch unit according to claim 11, **characterised in that** a cover (14) is non-rotatably arranged laterally on the outer disk carrier (2) and has a plurality of takeover bores (36), which are circumferentially distributed about the rotation axis (X) and fluidly connected to the first distributor channel (41), wherein the takeover bores (36) of the cover (14) and the transfer bores (33) of the deflector ring (30) are arranged relative to each other such that during each revolution of the cover (14) about the rotation axis (X) the transfer bores (33) and the takeover bores (36) at least once are temporarily fluidly interconnected with each other.

13. Dual clutch unit according to claim 12, **characterised in that** the cover (14) of the outer disk carrier (2) projects into the first distributor channel (41) providing a rotary transmission leadthrough (51) between the takeover bores (36) of the cover (14) and the first distributor channel (41) of the first inner disk carrier (3).

14. Drive assembly for driving a drive axle of a motor vehicle, comprising:
a driving machine with a motor shaft,
two output shafts (50, 60) arranged concentrically to each other and
a clutch unit (1) arranged in a power path between the drive engine and the two output shafts (50, 60),
**characterised in**
**that** the clutch unit is a dual clutch unit (1) according to one of the claims 1 to 13,
wherein the motor shaft rotatingly drives the outer disk carrier (2), and
wherein a first output shaft of the two output shafts (50) is non-rotatably connected to the first inner disk carrier (3) and a second output shaft of the two output shafts (60) is non-rotatably connected to the second inner disk carrier (4).

## Revendications

1. Unité d'embrayage double pour la répartition variable du couple sur deux arbres de sortie , comprenant :
un support de lamelles extérieur (2) pouvant être entraîné en rotation autour d'un axe de rotation (X),
un premier support de lamelles intérieures (3),
un premier paquet de lamelles (7) pour la transmission du couple entre le support de lamelles extérieur (2) et le premier support de lamelles intérieur (3),
un deuxième support de lamelles intérieures (4), le premier support de lamelles intérieures (3) et le deuxième support de lamelles intérieures (4) étant disposés de manière à pouvoir tourner l'un par rapport à l'autre autour de l'axe de rotation (X),
un deuxième paquet de lamelles (8) pour la transmission du couple entre le support de lamelles extérieur (2) et le deuxième support de lamelles intérieur (4),
dans lequel l'unité d'embrayage double comprend en outre :
une alimentation centrale en huile (27) pour alimenter le premier paquet de lamelles (7) et le deuxième paquet de lamelles (8) en fluide de refroidissement, un premier canal de distribution (41) qui est formé dans le premier support de lamelles intérieur (3) et qui présente une ouverture d'entrée (43) par laquelle le premier canal de distribution (41) est relié à l'alimentation centrale en huile (27) de manière à conduire le liquide,
un deuxième canal de distribution (52), qui est formé dans le deuxième support de lamelles intérieur (4) et qui est relié à l'alimentation centrale en huile (27) par le premier canal de distribution (41) de manière à conduire le liquide, et
des canaux de sortie (25) qui sont formés dans le premier support de lamelles intérieur (3) pour conduire le fluide de refroidissement dans le premier paquet de lamelles (7) et dans le deuxième support de lamelles intérieur (4) pour conduire le fluide de refroidissement dans le deuxième paquet de lamelles (8), et
le premier support de lamelles intérieur (3) présente au moins un alésage de passage (54), par lequel le deuxième canal de distribution (52) est relié au premier canal de distribution (41) de manière à conduire le liquide,
**caractérisé en ce**
**que** un axe longitudinal (L) du au moins un alésage de passage (54) forme avec l'axe de rotation (X) un angle d'alésage (α).

2. Unité d'embrayage double selon la revendication 1, **caractérisée en ce que** le premier support de disque intérieur (3) présente une saillie axiale (56) avec l'au moins un alésage de passage (54), la saillie (56) pénétrant dans le deuxième canal de distribution (52), et le deuxième canal de distribution (52) étant conçu, au moins dans une zone de chevauchement axial avec la saillie (56), comme une fente annulaire s'étendant dans la direction axiale.

3. Unité d'embrayage double selon la revendication 1 ou 2, **caractérisée en ce que** l'angle d'alésage (α) est compris entre 0,01° et 10°.

4. Unité d'embrayage double selon l'une des revendications 1 à 3, **caractérisée en ce que** des moyens de guidage (55) sont formés dans le premier canal de distribution (41) pour diriger une quantité partielle du fluide de refroidissement vers le au moins un alésage de passage (54).

5. Unité d'embrayage double selon la revendication 4, **caractérisée en ce que** les moyens de guidage présentent au moins un renfoncement allongé (55) qui s'étend sur au moins 20% de l'extension longitudinale axiale du premier canal de distribution (41) et qui débouche dans le au moins un alésage de passage (54).

6. Unité d'embrayage double selon l'une des revendications 1 à 5, **caractérisée en ce que** le premier support de disque interne (3) et le deuxième support de disque interne (4) sont soutenus axialement l'un contre l'autre.

7. Unité d'embrayage double selon l'une des revendications 1 à 6, **caractérisée en ce que** le premier canal de distribution (41) et/ou le deuxième canal de distribution (52) sont/seront chacun réalisés sous la forme d'une fente annulaire s'étendant dans la direction axiale et disposée concentriquement à l'axe de rotation (X).

8. Unité d'embrayage double selon l'une des revendications 1 à 7, **caractérisée en ce que** dans une paroi de canal radialement extérieure (45) du premier canal de distribution (41) et dans une paroi de canal radialement extérieure (57) du deuxième canal de distribution (52) sont formées respectivement des ouvertures de sortie (53, 66) qui débouchent dans les canaux de sortie (25), les ouvertures de sortie (53, 66) étant prévues sur une spirale imaginaire disposée concentriquement à l'axe de rotation (X).

9. Unité d'embrayage double selon l'une des revendications 1 à 8, **caractérisée en ce qu'**une surface d'enveloppe délimitant le premier canal de distribution (41) radialement vers l'extérieur et/ou une surface d'enveloppe délimitant le deuxième canal de distribution (52) radialement vers l'extérieur sont/seront de forme tronconique.

10. Unité d'embrayage double selon la revendication 9, **caractérisée en ce qu'**un angle d'ouverture (α) entre des génératrices (M) de la surface d'enveloppe respective et l'axe de rotation (X) est compris entre 0,01° et 10° et l'angle d'ouverture respectif (α) s'ouvre dans la direction d'écoulement (F) du fluide de refroidissement.

11. Unité d'embrayage double selon l'une des revendications 1 à 10, **caractérisée en ce qu'**une bague de renvoi (30) est reliée, côté entrée, à l'alimentation centrale en huile (27) et, côté sortie, au premier canal de distribution (41), de manière à conduire les liquides, la bague de renvoi (30) comportant une rainure collectrice (29) ouverte dans la direction circonférentielle et plusieurs tubes de transfert (33) répartis dans la direction circonférentielle, qui sont orientés au moins essentiellement axialement et sont reliés à la rainure collectrice (29) de manière à conduire les liquides.

12. Unité d'embrayage double selon la revendication 11, **caractérisée en ce qu'**un couvercle (14) est disposé solidairement en rotation sur le côté du porte-disques extérieur (2), lequel présente plusieurs trous de reprise (36) répartis dans le sens périphérique autour de l'axe de rotation (X), lesquels sont reliés au premier canal de distribution (41) de manière à conduire le liquide, les alésages de transfert (36) du couvercle (14) et les ouvertures de transfert (33) de l'anneau de renvoi (30) étant disposés les uns par rapport aux autres de telle sorte que les alésages de transfert (33) et les alésages de transfert (36) sont reliés entre eux au moins une fois temporairement de manière à conduire les liquides pendant une rotation du couvercle (14) autour de l'axe de rotation (X).

13. Unité d'embrayage double selon la revendication 12, **caractérisée en ce que** le couvercle (14) du porte-disques extérieur (2) fait saillie dans le premier canal de distribution (41) pour former un joint tournant (51) entre les alésages de reprise (36) du couvercle (14) et le premier canal de distribution (41) du premier porte-disques intérieur (3).

14. Dispositif d'entraînement pour entraîner un essieu moteur d'un véhicule automobile, comprenant :
une machine motrice avec un arbre moteur,
deux arbres de sortie (50, 60) disposés de manière concentrique l'un par rapport à l'autre, et
une unité d'embrayage (1) disposée dans le chemin de puissance entre la machine motrice et les deux arbres de sortie (50, 60),
**caractérisé en ce**
**que** l'unité d'embrayage est une unité d'embrayage double (1) selon l'une quelconque des revendications 1 à 13,
l'arbre du moteur entraînant en rotation le support de lamelles extérieures (2), et
un premier des deux arbres de sortie (50) étant relié de manière solidaire en rotation au premier support de lamelles intérieures (3) et un deuxième des deux arbres de sortie (60) étant relié de manière solidaire en rotation au deuxième support de lamelles intérieures (4).
